Europäisches Patentamt

European Patent Office

Office européen des brevets

(11) Publication number: **0 003 334**
**B1**

# EUROPEAN PATENT SPECIFICATION

(21) Application number: **79100159.7**

(22) Date of filing: **19.01.79**

(51) Int. Cl.³: **H 04 M 1/23, H 01 H 13/70**

(54) Keypad for telephone.

(30) Priority: **27.01.78 ES 233588 U**

(43) Date of publication of application:
**08.08.79 Bulletin 79/16**

(45) Publication of the grant of the European patent:
**11.02.81 Bulletin 81/6**

(84) Designated Contracting States:
**BE CH DE FR GB IT LU NL SE**

(56) References cited:
**DE - A - 2 346 392**
**DE - A - 2 606 442**
**DE - A - 3 126 466**
**DE - A - 3 226 494**

(73) Proprietor: **AMPER S.A.**
**Calle Torrelaguna, no 75**
**Madrid 27 (ES)**

(72) Inventor: **Gonzalez, Cesar Rico**
**Calle Pio Baroja no 2**
**Madrid (ES)**

(74) Representative: **Pirson, Jean et al,**
**c/o Bureau Gevers, S.A. rue de Livourne, 7 bte 1**
**B-1050 Brussels (BE)**

Courier Press, Leamington Spa, England.

Keypad for telephone

The invention concerns a new keypad for telephones, in particular for subscriber telephone sets, which is arranged on the basis that depression of any one of the constituent keys causes two contacts to be closed.

Keypads are already known that are constructed around this conditioning factor, the purpose of which is to simplify the dialling circuit and to improve the electrical characteristics, whenever the disc dial of a telephone is replaced by a keypad.

Nevertheless, known arrangements for keypads capable of realizing a double closure on each pulsation are more complex than advisable, in particular as far as the constitution of the keys and the mode of operation of the latter are concerned.

Consequently, an object of the invention is to provide the keypad as proposed with keys extremely simple in design, which act directly on the contacts to be closed, without any need for the intervention of any kind of auxiliary device.

A second object is based on the fact that the contacts controlling the keys are arranged in a modular fashion on independent supports which facilitate the mounting of said contacts and which, in addition, incorporate locating elements for the contacts installed on adjacent supports.

A further object of the invention is that the body of the keypad should constitute a dustproof unit, even at those points where its component parts fit together.

In order to achieve all of these objects and still others of this invention, one starts from a conventional layout in which the keypad is formed by the assembly of two half-cases which enclose, between them, a substrate on which the closing contacts and the keypad electrical circuit are mounted. One of said half-cases comprises a series of sockets through which the keys having to action the contacts can be mounted and guided in their operation. The rest of the layout, however, is distinct from any other system known or proposed up to now in the construction of this kind of keypad.

According to the concept of the invention, the closing contacts are mounted on modular supports in such a way that, on both sides of the operational movement of each of the keys, a pair of contacts constituting a switch are located.

In correspondence with the above, the bottom part of the keys incorporates a pair of diametrically opposite projections which rest on top of these switches. These projections are able to act as elementary pushing elements for the upper contacts, referred to as "moving contacts" henceforth, and to cause them to close an electrical circuit with the lower contacts, referred to as "fixed contacts" henceforth, each time the key is operated.

The fixed contacts and the moving contacts are fitted on independent parts which, however, can be joined and assembled, each pair of these parts constituting a modular support wherein each moving contact is situated above a fixed contact. There are provided as many modular supports of this type, as there are rows of keys included in the keypad.

The mounting of the parts carrying the moving contacts on the parts holding the fixed contacts is achieved by means of a series of barbed pins incorporated on the former parts and which cooperate with corresponding eyelets or retention straps provided in the latter parts.

In addition, the mounting of the parts carrying the fixed contacts on the substrate is made by means of a number of ribbed protuberances projecting from the lower face of said parts and which are lodged, under pressure and by deformation of the ribs, into sockets provided in the substrate to this purpose.

Other noteworthy features of the layout proposed are that the keys impinge directly and elastically on the substrate, and that each modular contact support incorporates a series of stops that limit the raising of the fixed contacts belonging to the adjoining support, ensuring in this way that there is a constant distance or separation between these contacts and the afore-mentioned substrate.

In order that the features of the proposed keypad may be more clearly understood, as well as its way of operation, this keypad is more completely described hereinafter with reference to the annexed drawings.

Figure 1 shows a top view of a keypad constructed according to the invention.

Figure 2 is a side elevation view of the same keypad; a part of the keypad case has been broken away and is shown in detail at a larger scale so that it can be seen how the two parts forming the case are fastened together.

Figure 3 is a front view of a portion of the lower part of the case.

Figure 4 is a section of the same portion as that of Figure 3.

Figure 5 shows one of the fastening elements, located on the upper part of the case, that functions in conjunction with the latching points illustrated in Figures 3 and 4.

Figure 6 is a front elevation view of the same element.

Figure 7 is a top view of the substrate fitted inside the case, illustrating the way in which the closing contacts, that constitute the switches controlled by the keys; are laid out in this case; some of said contacts are shown at a larger scale, the dashed line indicating how a key impinges on two of the switches to cause a circuit closure.

Figure 8 is a bottom view of the part holding the lower or fixed contacts.

Figure 9 is a top view of the same part as in Figure 8.

Figure 10 is a front view of the same part.

Figure 11 is a side elevation view corresponding to Figures 8 to 10.

Figure 12 is a top view of the part holding the upper or moving contacts.

Figure 13 is a bottom view of the same part as in Figure 12.

Figure 14 is a front view of the same part.

Figure 15 is a side elevation view corresponding to Figures 12 to 14.

Figure 16 is a cross-sectional view illustrating how the parts holding the moving and fixed contacts fit together to form modular supports, how these supports are located in the substrate, and also the manner in which, in accordance with the preceding, the contacts are ready to be operated by the keys mounted through the upper half-case of the device.

Figure 17 is a perspective view of one of the keys, which is still not yet provided with the means for resetting after depression.

Figure 18 is a bottom view of the same key.

Figure 19 is a side elevation view of a sliding pushing member which is mounted inside the key and which, with the help of a spring, constitutes the resetting mechanism for this key.

Figure 20 is a cross-sectional longitudinal view of the same pushing member.

Figure 21 is a top view of the pushing member.

Figure 22 shows a complete key, one quarter of it being sectioned off, illustrating how the pushing element is installed inside the key along with its spring.

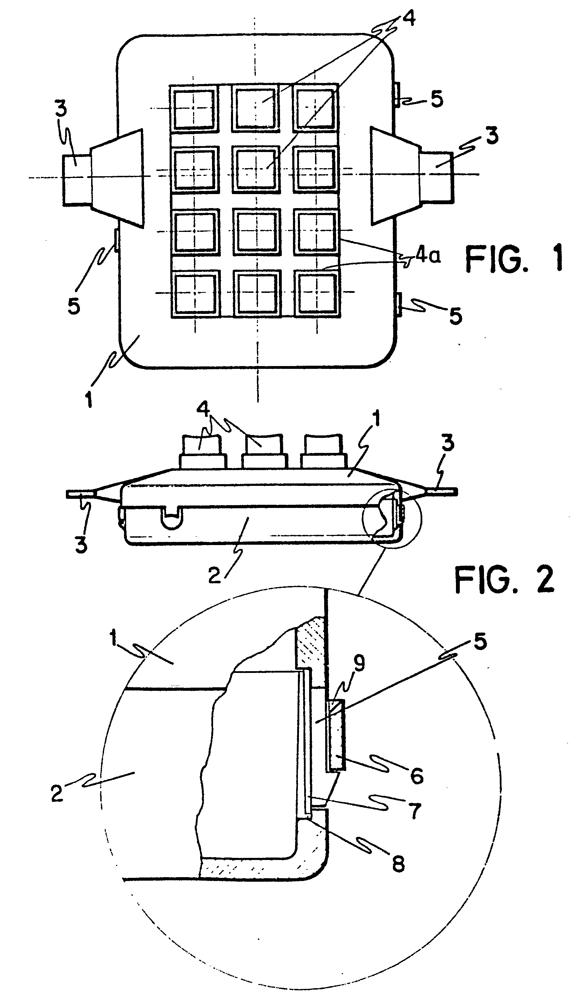

As already mentioned and as better seen on figures 1 and 2, the keypad consists of an upper half-case 1 and a lower half-case 2 which enclose the substrate on which the closing switches and the dial pulse circuit controlled by these switches are mounted. Usually, the upper half-case 1 incorporates two supports 3 to allow installation in the body of the telephone set and includes sockets 4a for the mounting and guidance of the keys 4, which are of size and arrangement in accordance with normalized standards.

The fastening between the upper half-case 1 and the lower half-case 2 is made in such a way that locating elements provided between the two parts do not leave slits or spaces through which dust might penetrate. For this purpose, these locating elements are as barbed pins 5, projecting from and integral with the edge of the upper half-case 1. These pins hook onto straps 6 formed correspondently on the external side surface of the lower half-case 2. A particular feature is that these barbed pins are provided with a collar 7 on their periphery, coplanar with their rear face. This collars fits into a corresponding groove formed in the inner face of the lower half-case.

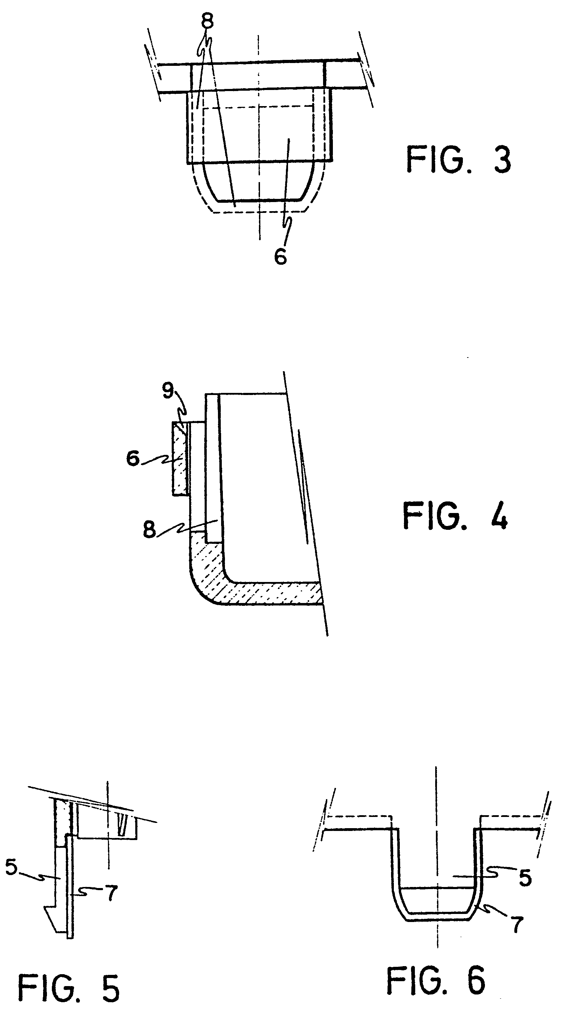

Figures 3 and 4 more clearly show the groove 8 provided for the collar 7 in the lower half-case.

Likewise, it may be seen how the strap 6 which retains the barbed pin 5 has a top edge which is bevelled for facilitating the penetration of the pin during assembly.

Figures 5 and 6 illustrate one of the fastening pins in detail, being free of the complexity of the coupling arrangements; the layout and extension of the peripheral collar 7 can be more clearly observed.

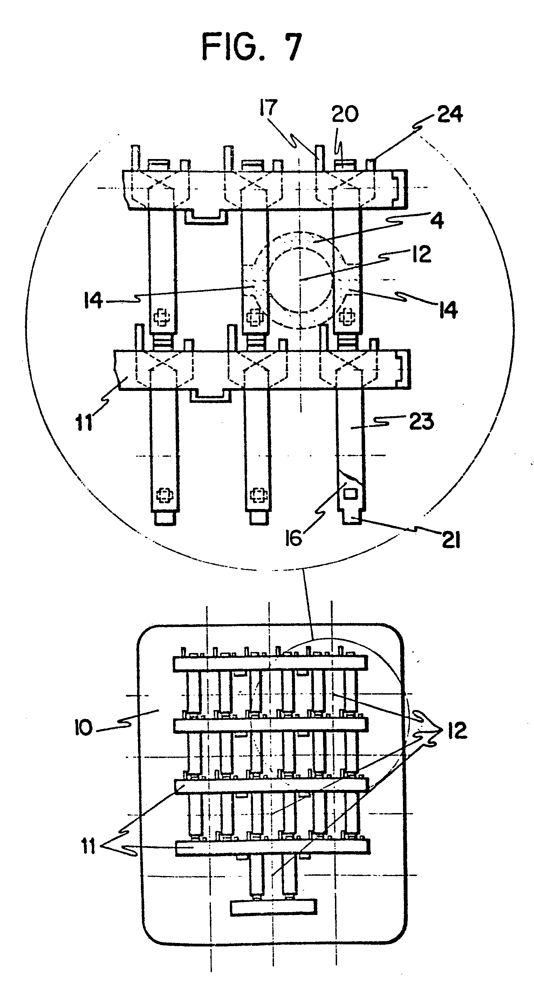

Enclosed between the two half-cases 1 and 2, the coupling arrangements of which have just been described, the substrate represented schematically in Figure 7 and generally designated by reference numeral 10 is located. On one side of the substrate such as shown, closing contacts are situated, which, when operated by the keys, control the dial pulse circuit, while on the other side (not shown) of this substrate the circuit itself with its components is located.

The contacts are grouped together to form as many rows as there are rows of keys on the keypad; they are fitted on the modular supports, designated by reference numeral 11, in such a way that the travel of each of the keys, defined by the crossing points 12 of the dash-and-dot lines, is flanked by two switches formed of said contacts. In the amplified detail of the figure, the dashed line shows one of the keys 4 schematically, which is moving axially with respect to the trajectory defined by the cross point 12; it is to be noticed how, by means of a pair of pushing elements 14 that are provided in diametrically opposite locations on the side of the key, a key, when moved, can impinge on the flanking switches.

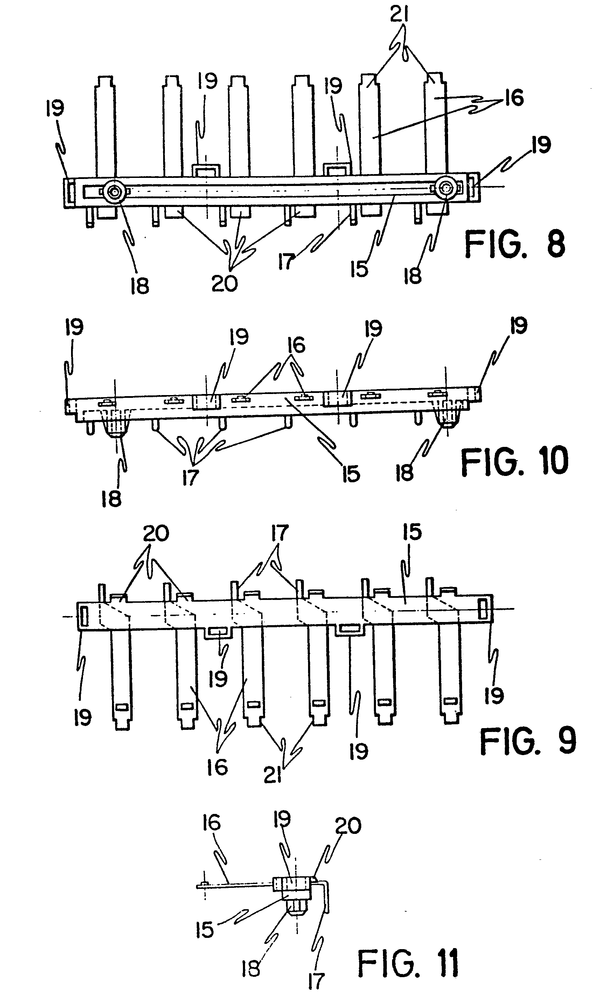

The construction of the modular supports 11 that hold the contacts constituting the closing switches can be best seen in Figures 8 to 15 which illustrate the characteristics of the parts of which these supports are made.

Indeed, each modular support 11 consists of the combination of two parts that incorporate the moving contacts and the fixed contacts of each switch respectively.

The part that incorporates the fixed contacts is shown in Figures 8 to 11. As it can be seen, it consists of one elongated member 15, preferably made of a plastic material, at one extremity of which the wafers 16 constituting the lower contacts are inserted in such a way that they protrude as a connecting pin 17.

This part being described also includes at least one pair of ribbed studs 18 for press-fitting into the corresponding orifices provided in the substrate 10. The member 15 has at least four retaining straps 19, two located at the ends and two in the middle area of this element, and on which the hooks provided on the part (such as explained hereinafter) that carries the moving contacts fasten.

Finally, the member 15 also comprises a number of stops 20, projecting on the remote side from the contact wafers 16 and opposite to the latter. These stops work in conjunction with a number of extensions 21 provided on the wafers in order to achieve a uniform distance between all the fixed contacts and the substrate, this being explained further on.

The part incorporating the moving contacts is similar in form to that part already described, and is complementary to the latter.

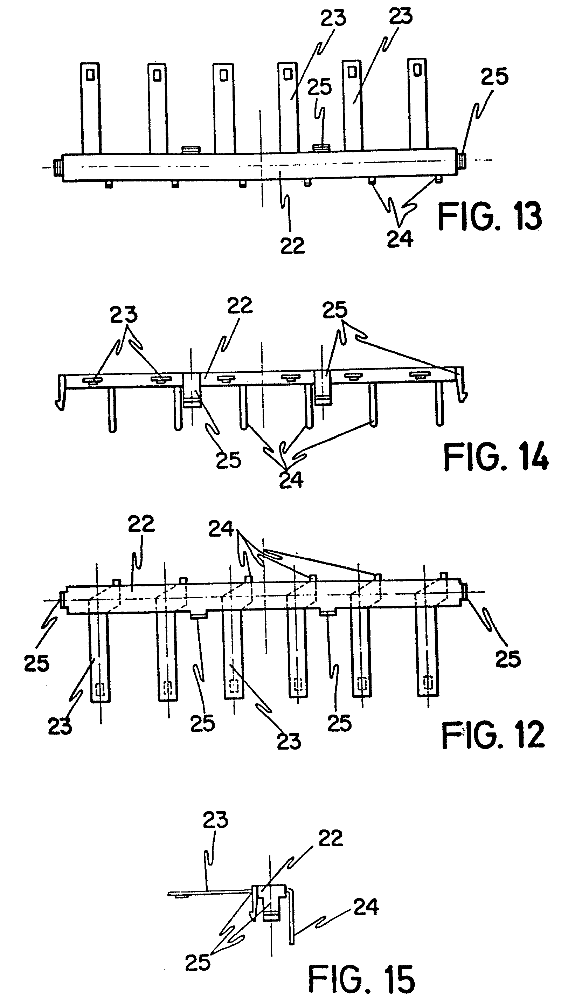

Indeed, this other part, illustrated in Figures 12 to 15, also consists of an elongated member 22 having the same length and the same width as member 15 and which, like the latter, has inserted in one of its extremities a series of contact wafers 23 with connecting pins 24, said wafers 23 coinciding in number and location with the wafers 16 so that, when assembled, wafers 23 lie directly above wafers 16. The assembly is made by means of barbed pins 25 which act in cooperation with retaining straps 19.

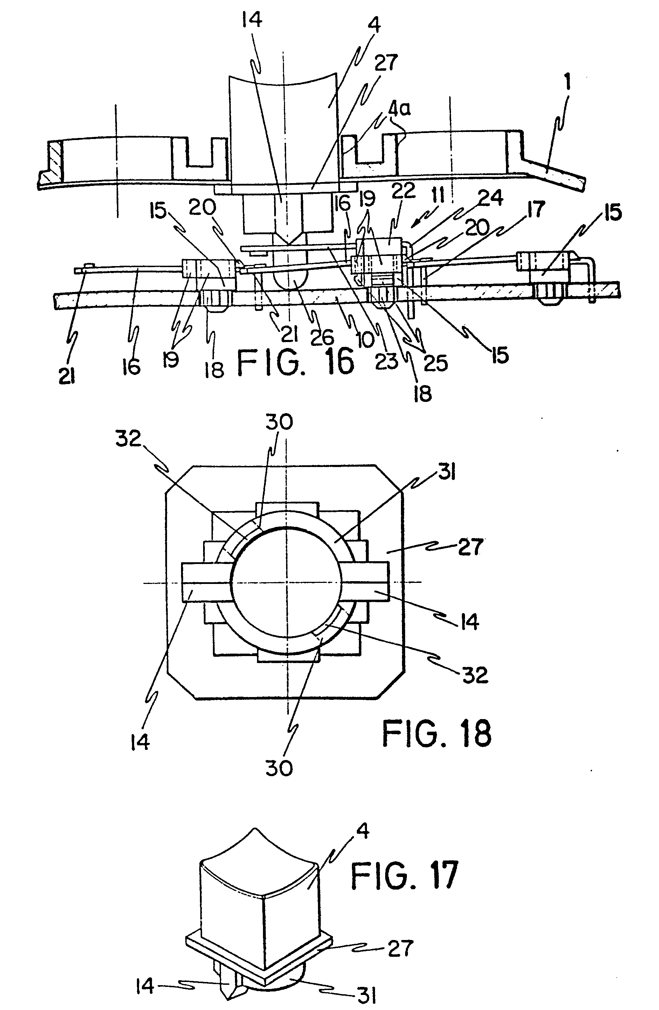

The specific way in which assembly of parts 15 and 22 is made in order to form a modular support 11, as well as the manner in which the modular supports are fitted on the substrate and linked with the keys operating the contacts, can be seen in Figure 16.

In said Figure 16, which shows a portion of the upper half-case 1 in association with the substrate 10 wherein the closing contacts are fitted, only one key is illustrated and a complete representation of only one of the modular supports holding these contacts has been provided, in order to simplify the drawing.

As it can be appreciated, the part 22 incorporating the moving contacts 23 is located exactly above the part 15, which holds the fixed contacts 16. These two parts 15 and 22 are held together by the action of the barbed pins 25 and the retaining strap 19. The assembly so formed constitutes a modular support 11 which is held to the substrate 10 by penetration of the studs 18 into the orifices prepared in this substrate, through which the connecting pins 24 and 17 of the contact wavers also penetrate for soldering into the electrical circuit prepared on the opposite face of the substrate.

It can now be observed that the distance between the various modular supports is uniform and that a correct positioning is determined by the prolongation or extension 21 of each fixed contact 16, which is retained below one of the stops 20 provided on the preceding modular support. It can also be observed that the pushing elements 14 of the keys 4 (which are also shown in Figure 7) are located above the moving contacts 23 of each support, and that the idle or rest position of the key (that is the position shown in the Figure 16) determines the maximum elevation for said moving contacts. The combination of the stops 20 with the pushing elements 14 therefore establishes a uniform and permanent separation for all the switches when the system is in the idle state.

The idle state of the keys 4 is defined by a pushing element 26, which acts elastically against the substrate 10 and which, with the help of a spring, forces the key towards a position projecting beyond and above the half-case 1. In Figure 16, this state can clearly be seen, as well as the emergence limit of the key such as determined by the stop formed by a lower lip 27 provided on the key itself and acting against the inside face of the upper half-case 1.

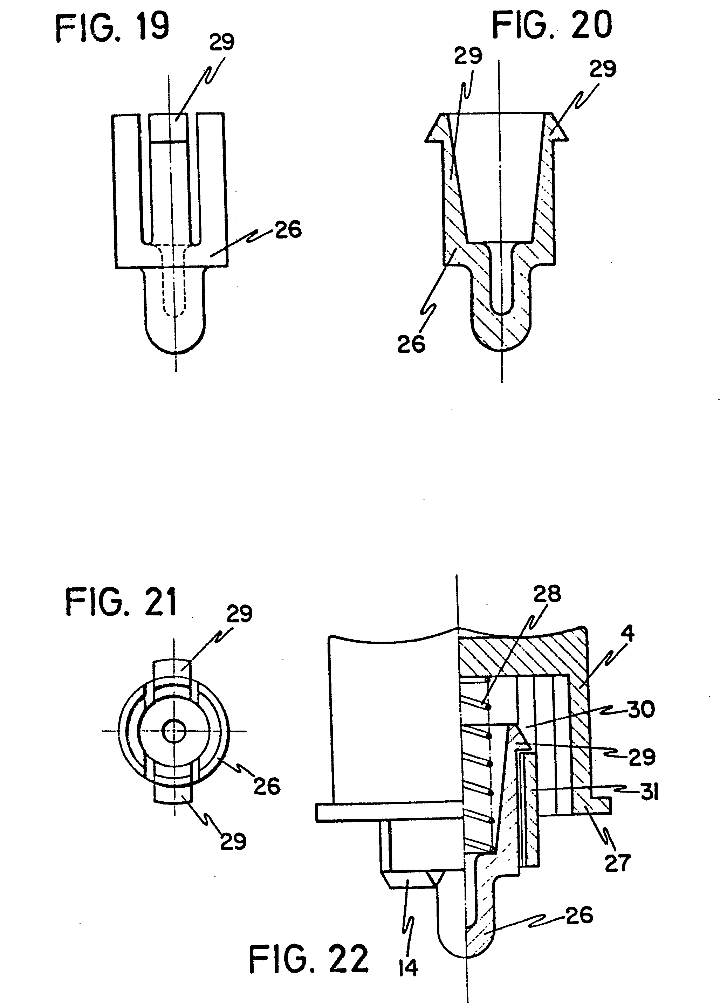

The characteristics of the key can be ascertained by examining Figures 17 to 22, more particularly Figure 22 which shows this key completely but with one quarter sectioned off.

As it can be seen, each key comprises a hollow shell 31, which extends below the raising-limiter lip 27.

On the outside of this shell, the pushing elements 14 are formed and in its inner end, this shell comprises a pair of axially arranged and diametrically opposite slots 30 (Figure 18 shows the exact location of said slots).

Inside the key shell 31, a generally cylindrical part 26 is located, having a lower extension with a rounded tip and constituting the proper pushing and positioning element of the key.

This pushing element 26 is shown in detail in Figures 19, 20 and 21. It can be appreciated that this element 26 has a pair of lateral pins 29; these pins are flexible and are ended with a wedge-shaped head which significantly projects from the main body of the element 26 (see particularly Figure 21).

The wedge-shaped heads of the pins 29 are those which, when lodged in the axial openings 30 of the key shell 31, prevent the pushing element from coming out once it has been mounted. A spring 28 is inserted between the base of this pushing element and the lower face of the key 4 (this can be seen in Figure 22).

Assembly of pushing element 26 is facilitated by the provision of bevelled edges 32 formed in the inner face of the lower edge of the shell (see Figure 18). In this way, the wedge-shaped heads of the pins 29 can be more easily inserted.

The operation of a keypad, as proposed according to the invention, can be clearly deduced from all that has been explained hereinabove.

While the system is in the idle state, the keys are held in the raised position by their respective pushing elements 26 (see Figure 16), and the moving and fixed contacts are separated from one another by a predetermined fixed amount which is given, as it has already been seen, by the interaction of the stops 20 and the pushing elements 16.

When any one key is depressed, it pushes directly via the elements 14 the two moving contacts which flank it (see also Figure 7), until they are brought into electrical contact with the fixed contacts. From this moment, and as long as the key continues to be depressed, the moving contacts push against the fixed ones. The latter which are somewhat separated from the substrate flex until they come into contact with it. The moving contacts act in this way, to a slight extent, in correspondence with the key depression and ensures a good electrical contact at all times.

When the key is released, reaction of the spring 28, in conjunction with the pushing element 26, returns the key to its idle position. The contacts 16 and 23 are restored to their idle positions by their own elasticity.

## Claims

1. Keypad for telephone of the kind consisting of a two-part sealed and dust proof case, one of these parts comprising sockets for the mounting and guidance of the keys, the latter being arranged so that each of them upon actuation causes two pairs of contacts fitted onto a substrate mounted inside the case to be closed simultaneously, this keypad being characterized in that the afore-mentioned contacts comprise a number of modular supports, each of which consists of two independent elements which are fastened to one another and, when joined, define a positioning means for the contacts belonging to the adjacent modular support, the means provided on the keys to cause two pairs of contacts to be closed simultaneously comprise two identical protuberances which are made integral with the key and protrude jointly from diametrically opposite points of the base of this key, the keys have a positioning mechanism restoring them to their idle position and consisting of pushing elements having an elastic action and reacting against the substrate itself where the contacts are fitted.

2. Keypad for telephone according to claim 1, characterized in that, of the two parts forming in each case a modular support for the contacts one incorporates a plurality of fixed contacts and the other an equivalent number of moving contacts, with the particularity that, when these two parts are joined, each moving contact overlaps a fixed one.

3. Keypad for telephone according to claim 2, characterized in that the part that incorporates the fixed contacts positions the latter at a short distance from the base substrate, in order to provide them with a certain degree of movement to accompany the depression of the key, and in that the mounting of said part on the afore-mentioned substrate is achieved by the insertion of a number of projecting studs provided on the lower face of said part into receiving orifices formed in the substrate, said studs having at least one pair of deformable ribs ensuring a meshing action when press-fitted.

4. Keypad for telephone according to any of claims 1 to 3, characterized in that the positioning means formed by each modular support for the contacts belonging to the next modular support consist of a number of horizontal stops protruding from each part bearing fixed contacts, opposite to the latter, the fixed contacts of said adjacent modular support being retained by means of these stops at their free ends, ensuring in this way a constant gap between the fixed contacts and the moving contacts of each support.

5. Keypad for telephone according to any of claims 2 to 4, characterized in that, for the purpose of retaining the fixed contacts by the stops of the adjacent modular supports, said fixed contacts have an extension at their free end.

6. Keypad for telephone according to claim 1, characterized in that one pair of closing contacts, consisting of one fixed contact and one moving contact, is situated on either side of a key and below the latter, their location being such that each moving contact of said pairs is in a position to be pushed by one of the projections protruding from said diametrically opposite points on the lower part of the said key.

7. Keypad for telephone according to either of claims 1 and 6, characterized in that the projections protruding from each key in order to push the moving contacts of a switch determine, in the idle position of the key, the idle position of said moving contacts.

8. Keypad for telephone according to claim 1, characterized in that the pushing elements with the elastic action, which constitute the means for retaining the keys in their idle position, are formed of cylindrical parts axially slidable along the interior of the core of said keys, these cylindrical parts have an outward projection and are biased towards the idle position by means of a spring housed between each one of these projections and the top inside face of the respective keys, and these cylindrical parts have in addition, on their sides, two diametrically opposite lips positioned parallel to the axis and terminated in wedge-shaped points which project radially outwards, these wedge-shaped points fitting into axial slots formed in the shell of the key so as to act against the spring pressure and to form movement limiters.

9. Keypad for telephone according to claim 1, characterized in that the fastening mechanism between the two parts forming the case consist of tongues projecting from the upper part and terminated in an externally thickened wedge-shaped section in order to permit a latching action with eyelets formed in the other part, and, for the purpose of providing the fastening points with a hermetic seal against dust, each of said tongues is equipped with a collar provided around its periphery and coplanar with its rear face, said collar lodging in a corresponding recess on the inside face of the part incorporating the eyelets, so that, when both parts are pressed together, a labyrinth-type joint is formed.

## Revendications

1. Clavier pour téléphone du type comprenant un boîtier scellé et étanche aux poussières en deux parties, l'une de ces parties comprenant des douilles pour le montage et le guidage des touches, ces dernières étant agencées de façon que chacune d'elle, après actionnement, provoque la fermeture simultanément de deux paires de contact assemblés sur un support monté à l'intérieur du boîtier, ce clavier étant caractérisé en ce que les contacts précités comprennent un certain nombre de supports modulaires dont chacun est constitué de deux éléments indépendants qui sont fixés l'un à l'autre et qui, lorsqu'ils sont réunis, déterminent un moyen de positionnement pour les contacts appartenant aux supports modulaires adjacents, les moyens prévus sur les touches pour entraîner la fermeture simultanément des deux paires de contact comprenant deux saillies identiques qui sont réalisées de manière solidaire de la touche et font saillie ensemble à partir de points diamétralement opposés de la base de cette touche, les touches ayant un mécanisme de positionnement qui les ramène à leur position de repos et qui consiste en éléments de poussée qui présentent une action élastique et qui réagissent contre le support lui-même où les contacts sont montés.

2. Clavier pour téléphone suivant la revendication 1, caractérisé en ce que, des deux pièces formant dans chaque boîtier un support modulaire pour les contacts, l'un comprend un grand nombre de contacts fixes et l'autre un nombre équivalent de contacts mobiles, avec cette particularité que, lorsque ces deux pièces sont réunies, chaque contact mobile recouvre un contact fixe.

3. Clavier pour téléphone suivant la revendication 2, caractérisé en ce que la pièce qui comprend les contacts fixes positionne ces derniers à une courte distance du support de base, en vue de leur procurer un certan degré de mouvement pour accompagner l'enfoncement de la touche et en ce que le montage de cette pièce sur le support précité est obtenu par l'insertion d'un certain nombre de goujons en saillie prévus sur la face inférieure de cette pièce dans des orifices de réception façonnés dans le substrat, ces goujons ayant au moins une paire de nervures déformables assurant une action de prise lorsqu'ils sont montés par pressage.

4. Clavier pour téléphone suivant l'une quelconque des revendications 1 à 3, caractérisé en ce que les moyens de positionnement formés par chaque support modulaire pour les contacts appartenant aux supports modulaires voisins consiste en un certain nombre de butées horizontales qui font saillie de chaque pièce portant des contacts fixes, à l'opposé de ces derniers, les contacts fixes du support modulaire adjacent étant retenus au moyen de ces butées, à leur extrêmité libre ce qui assure de cette manière un intervalle constant entre les contacts fixes et les contacts mobiles de chaque support,

5. Clavier pour téléphone suivant l'une quelconque des revendications 2 à 4, caractérisé en ce que, dans le but de retenir les contacts fixes par les butées des supports modulaires adjacents, les contacts fixes présentent une extension à leur extrémité libre.

6. Clavier pour téléphone suivant la revendication 1, caractérisé en ce qu'une paire de contacts de fermeture, comprenant un contact fixe et un contact mobile, est située de part et d'autre d'une touche et en dessous de cette dernière, leur position étant telle que chaque contact mobile desdites paires est en position pour être poussé par une des projections faisant saillie à partir des points diamétralement opposés sur la partie inférieure de la touche.

7. Clavier pour téléphone suivant l'une ou l'autre des revendications 1 et 6, caractérisé en ce que les projections qui font saillie à partir de chaque touche en vue de pousser les contacts mobiles d'un commutateur déterminent, dans la position de repos de la touche, la position de repos de ces contacts mobiles.

8. Clavier pour téléphone suivant la revendication 1, caractérisé en ce que les éléments de poussée à action élastique qui constituent les moyens de retenue des touches dans leur position de repos sont formés de pièces cylindriques capables de coulisser axialement le long de l'intérieur du noyau des touches, ces pièces cylindriques ayant une projection vers l'extérieur et étant rappelées vers la position de repos au moyen d'un ressort logé entre chaque fois l'une de ces projections et la face interne supérieure des touches respectives, et en ce que ces pièces cylindriques ont en plus, sur leurs côtés, deux lèvres diamétralement opposées disposées parallèlement à l'axe et terminées en des pointes en forme de coins qui font saillie radialement vers l'extérieur, ces pointes en forme de coins s'adaptant dans des fentes axiales façonnées dans la coquille de la touche de façon à agir contre la pression du ressort et à former des limitateurs de mouvement.

9. Clavier pour téléphone suivant la revendication 1, caractérisé en ce que le mécanisme de fixation entre les deux parties formant le boîtier consiste en languettes qui font saillie à partir de la partie supérieure et qui se terminent en une section en forme de coin épaissi vers l'extérieur en vue de permettre une action de fermeture avec des oeillets façonnés dans l'autre partie, et en ce que, dans le but de procurer aux points de fixation un joint hermétique vis-à-vis de la poussière, chacune des languettes est équipée d'une bride qui est prévue autour de sa périphérie et qui est coplanaire à sa face arrière, cette bride logeant dans une rainure correspondante sur la face interne de la partie comprenant les oeillets, de façon que, lorsque les deux parties sont pressées l'une contre l'autre, un joint de type labyrinthe soit formé.

### Patentansprüche

1. Tastenanordnung für ein Telefon, die aus einem zweiteiligen, abgedichteten und staubdichten Gehäuse besteht, wobei einer dieser Teile Buchsen zum Lagern und Führen der Tasten aufweist, die so angeordnet sind, daß jede von ihnen bei einer Betätigung zwei auf einer Unterlage angebrachte Paare von Kontakten, die innerhalb des Gehäuses gelagert ist, gleichzeitig schließt, dadurch gekennzeichnet, daß die vorerwähnten Kontakte eine Anzahl von Modullagern aufweisen, von denen jedes aus zwei unabhängigen Elementen besteht, die aneinander befestigt sind und im verbundenen Zustand eine Positioniereinrichtung für die zu dem benachbarten Modullager gehörenden Kontakte festlegen, daß die auf den Tasten vorgesehene Einrichtung zum gleichzeitigen Schließen von zwei Paaren von Kontakten zwei identische Vorsprünge aufweist, die einstückig mit der Taste ausgebildet sind und gemeinsam von diametral gegenüberliegenden Punkten der Basis der Taste hervorstehen, und daß die Tasten einen sie in ihre Ruhestellung zurückführenden Positioniermechanismus haben, der aus Stoßelementen besteht, die eine elastische Wirkung und Reaktion gegen die Unterlage selbst haben, wo die Kontakte angebracht sind.

2. Tastenanordnung für ein Telefon nach Anspruch 1, dadurch gekennzeichnet, daß von den in jedem Gehäuse ein Modullager für die Kontakte bildenden zwei Teilen eines eine Vielzahl von festen Kontakten und das andere eine äquivalente Anzahl von beweglichen Kontakten einschließen, mit der Besonderheit, daß, wenn diese zwei Teile verbunden sind, jeder bewegliche Kontakt einen festen überlappt.

3. Tastenanordnung für ein Telefon nach Anspruch 2, dadurch gekennzeichnet, daß der Teil, der die festen Kontakte einschließt, diese mit einem kurzen Abstand von der Grundunterlage festlegt, um ihnen einen bestimmten Bewegungsgrad zum Teilnehmen am Drücken der Taste zu verleihen, und daß das Anbringen des genannten Teils auf der zuvor erwähnten Unterlage durch Einsetzen einer Anzahl von vorspringenden Stutzen, die an der unteren Stirnfläche des genannten Teiles vorgesehen sind, in in der Unterlage ausgebildeten Aufnahmeöffnungen erreicht ist, wobei die genannten Stutzen mindestens ein Paar von verformbaren Rippen haben, die eine Eingriffswirkung sicherstellen, wenn sie unter Druck eingepaßt sind.

4. Tastenanordnung für ein Telefon nach einem der Ansprüche 1 bis 3, dadurch gekennzeichnet, daß die Positionierungseinrichtung, die von jedem Modullager für die Kontakte gebildet ist, die zu dem nächsten Modullager gehören, aus einer Anzahl von horizontalen Anschlägen besteht, die von jedem feste Kontakte tragenden Teil gegenüberliegend zu den letzteren hervorstehen, wobei die festen Kontakte des genannten benachbarten Modullagers mit Hilfe dieser Anschläge an ihren freien Enden festgehalten werden, wodurch auf diese Weise ein konstanter Spalt zwischen den festen Kontakten und den beweglichen Kontakten eines jeden Lagers sichergestellt wird.

5. Tastenanordnung für ein Telefon nach einem der Ansprüche 2 bis 4, dadurch gekennzeichnet, daß zum Zwecke des Festhaltens der festen Kontakte durch die Anschläge der benachbarten Modullager die genannten festen Kontakte an ihrem freien Ende eine Verlängerung haben.

6. Tastenanordnung für ein Telefon nach Anspruch 1, dadurch gekennzeichnet, daß ein Paar der schließenden Kontakte, das aus einem festen Kontakt und einem beweglichen Kontakt besteht, auf jeder Seite einer Taste und unterhalb dieser angeordnet ist, wobei ihre Anordnung so ist, daß jeder bewegliche Kontakt der genannten Paare sich in einer Lage befindet, daß er von einem der Vorsprünge anzustoßen ist, die von den genannten diametral gegenüberliegenden Punkten an dem unteren Teil der genannten Taste hervorstehen.

7. Tastenanordnung für ein Telefon nach Anspruch 1 oder 6, dadurch gekennzeichnet, daß die Vorsprünge, die von jeder Taste hervorstehen, um die beweglichen Kontakte eines Schalters anzustoßen, in der Ruhestellung der Taste die Ruhestellung der genannten beweglichen Kontakte festlegen.

8. Tastenanordnung nach Anspruch 1, dadurch gekennzeichnet, daß die Stoßelemente mit der elastischen Wirkung, die die Einrichtung zum Festhalten der Taste in ihrer Ruhestellung bilden, aus zylindrischen Teilen gebildet sind, die in axialer Richtung längs des Innenraums des Kernes der Tasten gleitbar sind, einen nach außen weisenden Vorsprung haben und in Richtung auf die Ruhestellung mit Hilfe einer Feder vorgespannt sind, die zwischen jedem einzelnen dieser Vorsprünge und der oberen Innenstirnfläche der jeweiligen Tasten eingeschlossen ist, wobei diese zylindrischen Teile an ihren Seiten zusätzlich zwei diametral gegenüberliegende Lippen haben, die parallel zu der Achse angeordnet sind und in keilförmigen Punkten enden, die radial nach außen vorspringen, wobei diese keilförmigen Punkte in axiale Schlitze eingreifen, die in der Schale der Taste so ausgebildet sind, daß sie gegen den Federdruck wirken und Bewegungsbegrenzungen bilden.

9. Tastenanordnung für ein Telefon nach Anspruch 1, dadurch gekennzeichnet, daß der Befestigungsmechanismus zwischen den zwei Teilen, die das Gehäuse bilden, aus Zungen besteht, die von dem unteren Teil hervorstehen und in einem äußeren verdickten keilförmigen Teil enden, um eine Verriegelungswirkung mit in dem anderen Teil ausgebildeten Augen zu ermöglichen, und, zum Zwecke des Vorsehens von Befestigungspunkten mit einer hermetischen Abdichtung.

FIG. 1

FIG. 2

FIG. 3

FIG. 4

FIG. 5

FIG. 6

# FIG. 7

FIG. 8

FIG. 10

FIG. 9

FIG. 11

4

FIG. 13

FIG. 14

FIG. 12

FIG. 15

0 003 334

FIG. 16

FIG. 18

FIG. 17

6

FIG. 19

FIG. 20

FIG. 21

FIG. 22